# EUROPÄISCHE PATENTSCHRIFT

(11) **EP 3 290 744 B1**
(45) Veröffentlichungstag und Bekanntmachung des Hinweises auf die Patenterteilung: **05.08.2020**
(21) Anmeldenummer: 17188721.9
(22) Anmeldetag: 31.08.2017
(51) Int. Cl.: F16G 5/20

(54) **KRAFTÜBERTRAGUNGSRIEMEN**
POWER TRANSMISSION BELT
COURROIE DE TRANSMISSION DE PUISSANCE

(30) Priorität: 05.09.2016 DE 102016116558
(43) Veröffentlichungstag der Anmeldung: 07.03.2018
(73) Patentinhaber: Arntz Beteiligungs GmbH & Co. KG, 37671 Höxter (DE)
(72) Erfinder: Ohlhäuser, Dr., Marlene, 33039 Nieheim (DE); Ohlhäuser, Rudolf, 33039 Nieheim (DE)
(74) Vertreter: Gramm, Lins & Partner Patent- und Rechtsanwälte PartGmbB

(56) Entgegenhaltungen:
- EP-A2- 1 930 622
- US-A1- 2004 214 676
- US-A1- 2010 075 793

## Beschreibung

Die Erfindung betrifft einen Kraftübertragungsriemen, insbesondere einen Keilriemen oder einen Keilrippenriemen, mit einem Riemenkörper, an dem eine Kraftübertragungszone ausgebildet ist, wobei der Riemenkörper insgesamt oder die Riemenschicht, die die Kraftübertragungszone umfasst, aus einem Ethylen-alpha-Olefin(EAO)-Elastomer gebildet ist und wobei unmittelbar auf der Kraftübertragungszone eine Beschichtung aus einem thermoplastischen Elastomer (TPE) aufliegt.

Keilriemen und Keilrippenriemen sind gelegentlich auf der kraftübertragenden Seite mit einer Beschichtung versehen, die beispielsweise die Abriebfestigkeit erhöhen oder dem Riemen andere besondere Eigenschaften verleihen soll.

Derartige Beschichtungen können beispielsweise aus thermoplastischen Elastomeren bestehen, die in der Regel eingesetzt werden, um auf der Oberfläche des Riemenkerns oder der Kraftübertragungszone weitere Beschichtungen, Beflockungen oder Fasern anzubinden. Dabei macht man sich zunutze, dass thermoplastische Elastomere (Kurzzeichen TPE) die Gebrauchseigenschaften von Elastomeren (u.a. mechanische Belastbarkeit und Temperaturbeständigkeit) und von Thermoplasten (u.a. Schmelzbinderqualitäten) miteinander verbinden. Die Beschichtung oder Zwischenschicht aus TPE ist dadurch dem Riemenelastomer ähnlicher als eine reine TP-Schicht, kann aber gleichzeitig Beflockungen und Vliese gut anbinden.

Aus der US 8293357 B2 ist ein Zahnriemen aus Ethylen-alpha-Olefin mit einer Textilauflage aus einem vorzugsweise nicht-gewebten, d.h. vliesartigen Material auf der Zahnoberfläche bekannt. Die textile Auflage wird über eine Barriereschicht aus einem thermoplastischen Elastomer angebunden, die zumindest an den Flanken der Zähne die textile Auflage stark durchdringt und quasi teilweise in sich aufnimmt. In dieser Schrift wird erläutert, dass gerade EPDM/EPM-Riemen beim Anlaufen, insbesondere bei Kaltstarts und generell bei tiefen Arbeitstemperaturen zu Geräuschentwicklungen (durch Slip-Stick-Effekte, Quietschen) neigen. Die Geräuschentwicklung sei grundsätzlich mit Vliesauflagen weitgehend in den Griff zu bekommen, wobei jedoch vermieden werden müsse, dass EPDM/EPM-Riemenmaterial durch die Vliesauflage hindurchdringt.

Ein ganz ähnlicher Riemenaufbau wie bei der US 8293357 B2 ist aus der JP 2013/145032 A bekannt, die einen Riemen mit einer Olefinharz- oder TPE-Beschichtung auf der Oberfläche einer Kompressionsschicht beschreibt, die wiederum wenigstens teilweise mit einer Haut versehen ist. Die Haut kann ein Schmelzgemisch oder ein Textil aus Fasern aus thermoplastischem Harz sein.

Aus der EP1930622 A2 ist ein Kraftübertragungsriemen gemäß dem Oberbegriff des Anspruchs 1 bekannt.

Problematisch bei faser- oder vliesbeschichteten Riemen ist, dass sich die Laufeigenschaften durch Abrieb der Fasern während der Riemenlebensdauer verändern. Der Erfindung liegt daher die Aufgabe zugrunde, einen Kraftübertragungsriemen mit einer Kraftübertragungszone aus einem Ethylen-alpha-Olefin mit einer besonders langlebigen, abriebfesten und geräuschmindernden Beschichtung auszustatten, so dass sich die Laufeigenschaften bei längerem Betrieb nicht ändern.

Diese Aufgabe wird mit einem Kraftübertragungsriemen nach Anspruch 1 und dem zugehörigen Verfahren nach Anspruch 10 gelöst.

Zur Lösung der Aufgabe wird ein Kraftübertragungsriemen der eingangs genannten Art weitergebildet. Dieser besitzt einen Riemenkörper, an dem eine Kraftübertragungszone ausgebildet ist, wobei der Riemenkörper insgesamt oder eine Riemenschicht des Riemenkörpers, die die Kraftübertragungszone umfasst, aus einem Ethylen-alpha-Olefin(EAO)-Elastomer gebildet ist - was auch ein überwiegend EAO-haltiges Elastomer umfasst - und wobei unmittelbar auf der Kraftübertragungszone eine Beschichtung aus einem thermoplastischen Elastomer (TPE) aufliegt. Erfindungsgemäß ist nun diese Beschichtung eine äußere bzw. außen liegende Beschichtung, deren äußere Oberfläche zugleich die äußere, bei Betrieb zur Riemenscheibe gerichtete Riemenoberfläche bildet und damit auch die Wirkfläche der Kraftübertragungszone an der Riemenscheibe.

Gemäß der vorliegenden Erfindung ist das thermoplastische Elastomer der Beschichtung vom Typ thermoplastisches Polyolefin(PO)/Ethylen-alpha-Olefin(EAO)-Elastomer, dessen Polyolefin-Anteil 5 bis 35 Gew.-% beträgt. Der EAO-Elastomer-Anteil beträgt 50 Gew.-% bis 99 Gew.-% und ist damit vergleichsweise hoch.

In bevorzugten Ausführungsformen beträgt der Anteil des Polyolefins im TPE ab 3 % (% hier jeweils Gewichts-%), weiter bevorzugt ab 10 %, d.h., vorzugsweise 1 - 50, 3 - 50, 5- 50 oder 10 - 50 Gew.-%. In weiteren bevorzugten Ausführungsformen liegt die Obergrenze des Polyolefin-Gehalts des TPE in Gew.-% unter 30 %, insbesondere bis 25 % und besonders bevorzugt bis 20 % - sämtliche Obergrenzen jeweils in Verbindung mit den zuvor genannten Untergrenzen. Besonders bevorzugte Bereiche liegen zwischen 1 bis 20 Gew.-% und 10 bis 20 Gew.-% Polyolefin-Anteil.

Die erfindungsgemäße Riemenbeschichtung bewirkt einen niedrigen Reibbeiwert und eine gute Geräusch-Verminderung, insbesondere können Slip-Stick-Effekte wirksam vermieden werden. Dies führt zu leiserem Lauf gerade auch beim Anlaufen und unter extremen Lastbedingungen. Die Beschichtung weist außerdem eine hohe Abriebbeständigkeit auf, wodurch sich der Riemen über seine gesamte Laufzeit konstant verhält.

Durch das Thermoplast-Elastomer-Verhältnis wird erreicht, dass die Beschichtung eine genügend hohe Elastizität bei gleichzeitig sehr guten Geräuscheigenschaften besitzt.

In besonders bevorzugten Ausführungsformen beträgt der Polyolefin-Anteil des TPE der Beschichtung vorzugsweise 10 bis 25 Gew.-% und weiter vorzugsweise 10 bis 20 Gew.-%.

Allgemein versteht man unter "thermoplastischen Elastomeren" Kunststoffe, die gleichzeitig weiche, elastische Segmente und auch harte, kristallisierbare Segmente besitzen. Die weichen und elastischen Segmente, die "Weichsegmente" haben eine relativ hohe Dehnbarkeit und eine niedrige Glasübergangstemperatur, die harten und kristallisierbaren Segmente, die "Hartsegmente" haben eine geringere Dehnbarkeit und eine vergleichsweise höhere Glasübergangstemperatur. Hart- und Weichsegmente müssen miteinander unverträglich sein und - jeweils bereichsweise, mikroskopisch - als individuelle Phasen vorliegen. Man spricht daher auch von Weichphase und Hartphase. Die Segmente können mikroheterogen innerhalb von Blends, aber auch durch Organisation makromolekularer Strukturen, beispielsweise durch Faltung von Blockpolymeren entstehen. In jedem Falle sind für die thermoplastischen Elastomere thermolabile, reversibel spaltbare physikalische oder chemische, meist jedoch physikalische Vernetzungsstellen (Tertiärbindungen, physikalische Wechselwirkungskräfte) charakteristisch. Hierdurch sind die TPE in der Wärme formbar bzw. schmelzbar, obwohl sie unterhalb der hierfür erforderlichen Temperaturen elastomere Eigenschaften besitzen.

Man unterscheidet verschiedene Typen thermoplastischer Elastomere. Die Erfindung nutzt thermoplastische Polyolefin-Elastomere (auch als TPE-O oder TPE-V bezeichnet) und zwar Blends aus Polyolefinen und vernetzten oder vernetzbaren, bei der Riemenvulkanisation zu vernetzenden EAO-Elastomeren, und in besonders bevorzugten Beispielen, die unten noch näher beschrieben werden, Blends aus isotaktischem Polyolefin, insbesondere Polypropylen mit Ethylen-Propylen-(Dien)-Kautschuken. Letztere sind vorzugsweise bereits beim erfindungsgemäßen Beschichten des späteren Materials der Kraftübertragungszone mit dem TPE vernetzt oder teilvernetzt, können jedoch ggf. - insbesondere im Grenzflächenbereich zum Riemenelastomer-während der Riemenvulkanisation unter Einfluss eines radikalischen Vernetzungsmittels weiter vernetzt werden. Hierdurch wird die Haftung der Beschichtung auf der Kraftübertragungszone widerstandsfähiger gemacht. Für die Erfindung bevorzugte Typen umfassen solche, bei denen die EPM/EPDM-Phase in eine Polyolefin-Matrix eingearbeitet ist; vorzugsweise ist die Gummiphase vulkanisiert.

Der Elastomer-Anteil des TPE der Beschichtung bewirkt, dass Elastomer-Eigenschaften, wie sie für den Riemenkörper erforderlich sind, auch an der Oberfläche präsent sind. Es erfolgt ein sanfter Eigenschaftsübergang von Kern bzw. Rippe zu Beschichtung. Die pure, nicht weiter beschichtete TPE-Außenbeschichtung haftet sehr gut am Riemen-Elastomer. Der erfindungsgemäß beschichtete Riemen ist langlaufend, mechanisch stabil, besitzt einen geringen Abrieb und einen vorteilhaften Reibbeiwert. Wesentlich ist auch, dass der geräuschmindernde Effekt über die Laufzeit des Riemens vollständig erhalten bleibt.

Das Ethylen-alpha-Olefin des thermoplastischen Elastomers der Beschichtung, d.h. der Elastomer-Anteil des TPE bzw. das Material der Weichsegmente des TPE, auch als "Weichphase" bezeichnet, ist bevorzugt ein EPDM, ein EPM oder ein Gemisch aus beiden. Möglich ist auch ein Verschnitt mit weiteren Elastomeren, zum Beispiel mit Naturkautschuk (NR) und/oder Butadienkautschuk (BR) und/oder Isoprenkautschuk, sofern deren Anteil mengenmäßig untergeordnet ist, d.h. zusammengenommen unter 50 % bezogen auf EPDM und/oder EPM beträgt. Ein EPDM oder ein mit EPM verblendetes EPDM ist für den Elastomer-Anteil des erfindungsgemäßen TPE am meisten bevorzugt.

Das Polyolefin des TPE der Beschichtung, also der Thermoplast-Anteil bzw. das Material der Hartsegmente des erfindungsgemäßen TPE, die "Hartphase", ist bevorzugt ein Olefin-Homopolymer, eine Mischung mehrerer Polyolefin-Homopolymere oder auch ein Olefin-Copolymer, jedoch bevorzugt ein solches, das nicht selbst ein TPE darstellt, da sonst die Wirkung der Hartsegmente in Anbetracht des relativ hohen Elastomer-Anteils im TPE nach der Erfindung für die gewünschte Wirkung möglicherweise nicht ausreichte.

Für die Erfindung geeignete Polyolefine (Polyalkene) sind alle, die, wie für das thermoplastische Elastomer erforderlich, harte, kristallisierbare Segmente bilden können und mit den Elastomeren der Weichsegmente phasenunverträglich sind. Vorzugsweise sind dies alle Alpha-Olefinpolymere, insbesondere die Polymere der C₃-C₁₂-Olefine. Als besonders vorteilhaft wird es derzeit angesehen, wenn das Polyolefin des TPE der Beschichtung ein Polypropylen ist.

Das Ethylen-alpha-Olefin der Kraftübertragungszone ist ein übliches Riemen-Elastomer, vorzugsweise ausgewählt aus EPDM, EPM oder einem Gemisch aus diesen. Es kann optional (zusätzlich) mit weiteren Elastomeren verblendet bzw. verschnitten sein, zum Beispiel mit einem NR, BR und/oder IR. Vorzugsweise bleibt der Gehalt der Nicht-Ethylen-α-Olefin-Elastomere unter 50 Gew.% in der Elastomer-Komponente.

Das Riemenmaterial der Kraftübertragungszone oder des Riemens insgesamt ist ein peroxidisch vernetztes EAO, wodurch es zu einer guten Haftung zwischen Beschichtung und Riemenmaterial kommt, da eine gute physikalische und chemische Anbindung gewährleistet wird. Das Riemenmaterial kann des Weiteren die üblichen Füllstoffe und Additive enthalten, wie dem Fachmann bekannt. Diese Materialien, z.B. verstärkende (aktive) Füllstoffe, wie Silica oder Ruß, und funktionelle Additive, wie Vulkanisationsbeschleuniger und -verzögerer, UV-Schutzmittel und dergleichen gehören zum Allgemeinwissen des Praktikers auf diesem Gebiet und brauchen daher hier nicht gesondert beschrieben zu werden.

Ebenso kann das thermoplastische Elastomer der Beschichtung Additive und Füllstoffe enthalten. Insbesondere kann ein verstärkender Füllstoff, wie Siliziumdioxid, allgemein anorganische Füllstoffoxide oder Ruß enthalten sein.

In bevorzugten Ausführungsformen enthält das thermoplastische Elastomer der Beschichtung bis zu 50 Teile je 100 Teile TPE (im Folgenden in Anlehnung an "phr" auch als "ph(TPE)" bezeichnet) eines verstärkenden Füllstoffs. Bevorzugte Füllstoffmengen liegen ab 5 ph(TPE), weiter vorzugsweise ab 10 ph(TPE).

Der vorgenannte verstärkende Füllstoff ist vorzugsweise Ruß. Ruß bringt den Vorteil mit sich, dass die Beschichtung leitfähig wird und auf diese Weise ein statisches Aufladen des Riemens bei Betrieb wirksam verhindert werden kann. Die gewünschten geräuschmindernden Eigenschaften sind auch mit einem Füllstoff, z.B. Ruß, unverändert. (siehe Beispiele unten). Die Füllstoff-Rußmenge beträgt vorzugsweise 10 bis 30 ph(TPE).

Die Schichtdicke der TPE-Beschichtung beträgt vorzugsweise 0,02 bis 2 mm. Es ist ein Vorteil, dass die Schichtdicke groß genug gewählt sein kann, um während der Lebenszeit des Riemens nicht abzulaufen, aber auch klein genug, um lediglich die vorteilhaften Eigenschaften in Bezug auf Griff und Geräuschminderung zu bieten, ohne die mechanischen Eigenschaften des kraftaufnehmenden Rippenkerns zu beeinträchtigen. Die erfindungsgemäße Beschichtung ist wesentlich haltbarer als z.B. eine Beflockung.

In besonders bevorzugter Ausführungsform ist der Riemen ein Keilriemen oder ein Keilrippenriemen (auch als Rippenband oder englisch "V-ribbed belt" bezeichnet).

Die übrigen Komponenten des jeweiligen Riemens kann der Fachmann nach Bedarf frei auswählen, Hierzu gehören in erster Linie die Zugträger als Cordstränge oder in Form einer Zugträger-Lage, gegebenenfalls die Auswahl eines Materials für eine Zugträger-Einbettungszone und die Ausgestaltung des Riemenrückens. All dies kann im Rahmen üblicher fachmännischer Tätigkeit geschehen.

Die erfindungsgemäße TPE-Beschichtung kann sehr vorteilhaft auch als äußerste Schicht eines Riemenrückens aufgebracht werden. Dies ist besonders für Antriebskonfigurationen vorteilhaft, bei denen auch der Riemenrücken über Rollen läuft.

Der Riemen wird besonders vorteilhaft in einem Formverfahren hergestellt, wie dem Fachmann allgemein bekannt. Formverfahren für die Riemenherstellung sind u.a. in DE 10 2013 015 047 A1 beschrieben. Dabei wird das Material der Beschichtung vorzugsweise in Folienform auf einen vorkonfektionierten Wickel aufgebracht oder vor einer Konfektionierung auf eine für den Riemen vorgesehene Kernmischung dubliert.

Im Folgenden wird die Erfindung anhand einer Zeichnung näher erläutert, die jedoch rein illustrativen Zwecken dient.
- Fig. 1: zeigt einen Kraftübertragungsriemen in Form eines Keilrippenriemens mit erfindungsgemäßer Beschichtung;
- Fig. 2: zeigt einen Prüfstand für die Geräuschprüfung an Testriemen:

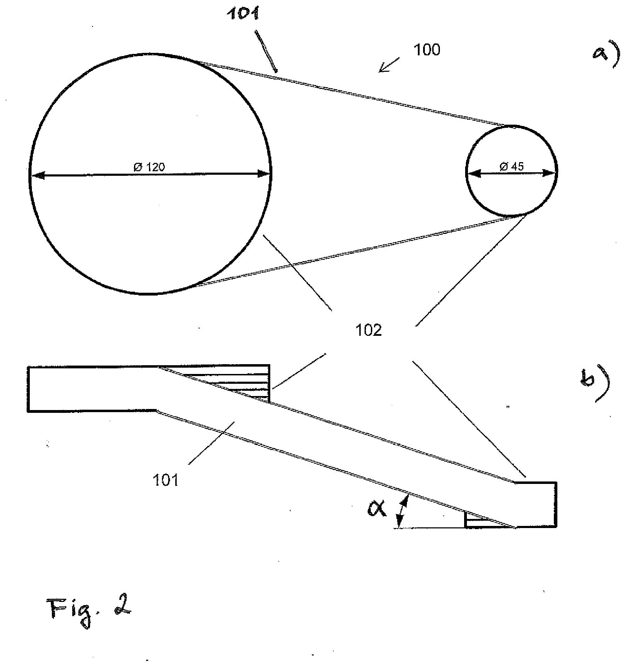

- Fig. 2 a): in Seitenansicht,
- Fig. 2 b): in Draufsicht.

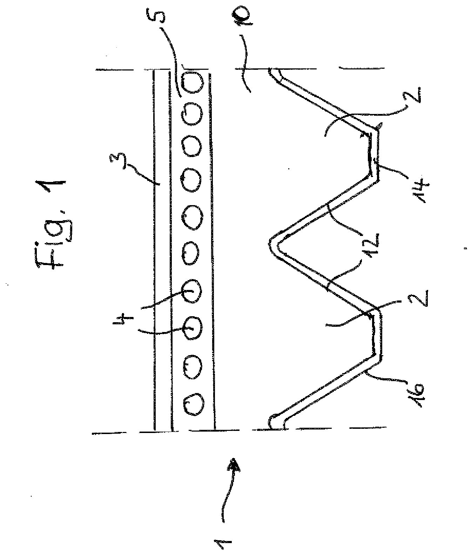

Figur 1 zeigt einen Kraftübertragungsriemen, hier in Form eines Keilrippenriemens **1** mit ausschnittsweise dargestellten zwei Rippen **2.** Der Riemen kann jedoch breiter sein und wird in der Regel mehr als zwei Rippen **2** besitzen. Auf der den Rippen abgewandten Seite besitzt der in diesem Ausführungsbeispiel gezeigte Riemen einen Riemenrücken **3,** der wie auf dem Gebiet üblich ausgebildet sein kann, also beispielsweise auch mehrschichtig, mit der erfindungsgemäßen Beschichtung auf der Außenseite oder mit einer zusätzlichen textilen Abdeckung. Zwischen Rippen **2** und Rücken **3** sind Zugträger **4** eingezogen, die eine Zugträgerlage **5** bilden. Die Einbettungslage **5** kann aus einem besonderen Zugträger-Einbettungsmaterial bestehen. Der Riemen besitzt einen Riemenkörper **10** aus einem Ethylen-alpha-Olefin-Elastomer. Der Riemenkörper **10** bildet zugleich den Unterbau des Keilrippenriemens **1,** an dem eine Kraftübertragungszone **12** ausgebildet ist. In einer üblichen einfachen Ausführungsform besteht der Riemenrücken **3** ebenfalls aus dem Elastomer des Riemenkörpers **10** und die Zugträger **4** sind unmittelbar - ohne gesondertes Einbettungsmaterial - in das einheitliche Riemenmaterial eingebettet. In diesem Besonderen Falle erstreckte sich der Riemenkörper **10** bis zum Riemenrücken **3,** d.h., die Bauteile **3**, **5** und **10** des Riemens, wie in dieser Figur dargestellt, würden insgesamt als Riemenkörper aufgefasst werden können. In dem nicht gesondert dargestellten Fall eines Keilriemens bildete der Riemenkörper **10** einen Riemenkern. In beiden Fällen - bei Keilriemen wie Keilrippenriemen - erfolgt die Kraftübertragung zwischen Riemen und Riemenscheibe im Wesentlichen über die Flanken des Kerns oder der Rippen **2.** Die Oberfläche der Kraftübertragungszone **12** ist vollständig mit einer äußeren Beschichtung **14** bedeckt, die aus dem erfindungsgemäßen thermoplastischen PO/EAO-Elastomer besteht. Die Oberfläche **16** dieser äußeren Beschichtung **14** bildet nun die eigentliche Wirkfläche der Kraftübertragungszone **12.** Über diese äußere Oberfläche **16** tritt der Riemen bei Betrieb mit der gerillten Riemenscheibe in Wechselwirkung. Die Beschichtung **14** bewirkt dabei eine gute Abriebfestigkeit und eine sehr gute Geräuschminderung über die gesamte Riemenlebens- bzw. -laufdauer.

Figur 2 zeigt einen Geräuschprüfstand nach den Vorgaben des VDA (Verband Deutscher Automobilhersteller). Die Darstellung ist schematisch und stark vereinfacht.

Der Übersichtlichkeit halber wurde nur eine Antriebsanordnung **100** als solche, ohne weitere Komponenten, mit zwei Keilrippenriemenscheiben **102** und einem darauf umlaufenden Keilrippenriemen **101** dargestellt. Fig. 2 a) zeigt eine Seitenansicht der Anordnung, Fig. 2 b) zeigt dieselbe Anordnung in Draufsicht.

Es handelt sich um einen Zweischeibenantrieb, bei dem die Keilrippenriemenscheiben **102** parallel zueinander versetzt werden, sodass der Keilrippenriemen mit einem Versatzwinkel **α** schräg von der einen Scheibe ab- bzw. auf die andere Scheibe aufläuft. Es wird mit α = 0° begonnen. Im Laufe der Geräuschprüfung wird der Winkel stufenweise in 0,5°-Schritten verändert. Während der Riemen läuft, wird subjektiv akustisch, d.h. durch Hören, festgestellt, ob Geräusche auftreten und bei welchem Winkel die Geräusche erstmals auftreten. Ziel ist, dass der Riemen bis zu einer gewissen, nicht zu kleinen Scheibenverstellung von 3,5° keine Geräusche macht - von den normalen und unvermeidlichen Laufgeräuschen, die auch bei 0° Verstellung auftreten, abgesehen.

### Versuchsaufbau, verwendeter Geräuschprüfstand und Daten des Tests:

Bei Testläufen mit Scheibenversatz wird das Geräuschverhalten in Abhängigkeit vom Winkelfehler untersucht. Als Testergebnis wird der Winkel bestimmt, bei dem der Keilrippenriemen gerade noch ohne hörbare Quietschgeräusche bleibt.

| | |
|---|---|
| Antriebsscheibe: | Ø 120 mm (Bezugsdurchmesser) |
| Leerlaufscheibe: | Ø 45 mm (Bezugsdurchmesser) |
| Leistung Antriebsscheibe: | 0 kW |
| Trumkraft: | 200 N |
| Drehzahl: | 0 - 1000 U/min |
| Prüftemperatur: | 20-25 °C |
| Standard-Riementyp: | 6 PK 1500 mm + 200 mm |
| Anzahl Prüfriemen: | 5 |

Die Prüfriemen werden unmittelbar vor dem Test 20 h in einem Hitzebiegewechsel-Prüfstand bei 110 °C vorkonditioniert. Die blanken Stahl-Riemenscheiben entsprechend der Standard-Geometrie (passend zum Standard-Riemenprofil).

### BEISPIELE

Für die thermoplastische Elastomer-Beschichtung wurde in allen Versuchen thermoplastisches PP/EPDM-Elastomer verwendet, wie nachfolgend in Tabelle 1 charakterisiert.

**Tabelle 1.1 - Elastomer-Anteile und Rußgehalt**

| Probe | Elastomer-Anteil [Gew.-%] | Thermoplast-Anteil [Gew.-%] | Rußanteil [ph(TPE)] | Erweichungs/ Schmelzpunkt [°C] | OFW [MOhm] |
|---|---|---|---|---|---|
| TPE1 | 78 | 22 | - | 130,8 | >3600 |
| TPE2 | 75 | 25 | 11 | 129,8 | <0,010 |
| TPE3 | 75 | 25 | 11 | 131,0 | <0,010 |

**Tabelle 1.2 - Physikalische Daten**

| Probe | Materialstärke [mm] | Reißfestigkeit [MPa] | Modul 10% [MPa] | Modul 100% [MPa] | Reißdehnung [%] |
|---|---|---|---|---|---|
| TPE1 | 0,16 | 11,0 | 3,2 | 5,0 | 662 |
| TPE2 | 0,21 | 10,0 | 4,1 | 5,3 | 531 |
| TPE3 | 0,27 | 8,6 | 4,8 | 5,3 | 534 |

### Versuche an Plattenmaterial

Abriebtest: Das folienförmige TPE - im Einzelnen die Proben TPE1, TPE2 und TPE3 - wird auf Elastomerplatten aus einer peroxidhaltigen EPDM-Kautschuk-Mischung thermisch fixiert. Im Anschluss wird die TPE-beschichtete EPDM-Platte vulkanisiert, und die so beschichteten Platten werden für 10.000 Zyklen einem Abriebtest mit Stahlrollen an einem Taber® Abraser 5130 (Taber Industries, US) unterzogen. Folgender Abrieb wurde ermittelt:

**Tabelle 2 - Abriebtest**

| | |
|---|---|
| | Abrieb in mg nach 10.000 Zyklen |
| Referenz (Elastomerplatte ohne Beschichtung) | 21,60 |
| Elastomerplatte mit TPE1 | 8,17 |
| Elastomerplatte mit TPE2 | 10,21 |
| Elastomerplatte mit TPE3 | 6,42 |

### Versuche an Testriemen

Folien aus TPE1, TPE2 und TPE3 wurden thermisch auf eine nicht beflockte Elastomerplatte (Elastomermaterial siehe Abriebtest) fixiert, zu Keilrippenriemen-Rohlingen konfektioniert und anschließend im Prägeverfahren zu fertigen Keilrippenriemen geformt und zugleich vulkanisiert. Die Testriemen weisen ein PK-Profil mit 6 Rippen auf; Riemenhöhe 4,7-4,8 mm; Rippenabstand 3,6 mm.

**Tabelle 3 - Reibbeiwerte von Testriemen**

| | |
|---|---|
| Testriemen (Keilrippenriemen 6 PK) | Reibbeiwert |
| beflockt** statt TPE-beschichtet | 0,83 |
| ohne TPE-Beschichtung oder Beflockung (Riemenelastomer an der Rippenoberfläche) | 0,92 |
| TPE1-beschichtet | 0,46 |
| TPE2-beschichtet | 0,47 |
| TPE3-beschichtet | 0,39 |

| | |
|---|---|
| ** Baumwoll-Kurzfaser-Beflockung (mittlere Faserlänge 0,5 mm) | |

### Prüfstandläufe

Die Testriemen wurden auf dem in Figur 2 gezeigten Prüfstand einer Geräuschprüfung unterzogen. Die Ergebnisse sind in Tabelle 4 angegeben.

**Tabelle 4 - Geräuschprüfung**

| Testriemen | Ergebnis |
|---|---|
| Testriemen mit TPE1-Beschichtung | kein Quietschen bis 3,5° Verstellung |
| Testriemen mit TPE2-Beschichtung | kein Quietschen bis 3,5° Verstellung |
| Testriemen mit TPE3-Beschichtung | kein Quietschen bis 3,5° Verstellung |
| Vergleichsriemen beflockt (Tab.3) | Quietschen bei/ab 1,5° Verstellung |

### Bezugszeichenliste

- 1: Keilrippenriemen
- 2: Rippe
- 3: Riemenrücken
- 4: Zugträger
- 5: Zugträger-Einbettungszone
- 10: Riemenkörper (Unterbau)
- 12: Kraftübertragungszone
- 14: äußere Beschichtung
- 16: äußere Oberfläche (der Beschichtung und der beschichteten Kraftübertragungszone)

- 100: Antriebsanordnung des Prüfstands
- 101: Keilrippenriemen
- 102: Keilrippenriemenscheiben

Kurzfassung: Der Kraftübertragungsriemen, vorzugsweise ein Keil- oder Keilrippenriemen, besitzt einen Riemenkörper an dem eine Kraftübertragungszone ausgebildet ist und der insgesamt oder in einer seiner Schichten, aus der die Kraftübertragungszone geformt ist, aus einem Ethylen-a-Olefin(EAO)-Elastomer gebildet ist. Unmittelbar auf der Kraftübertragungszone liegt eine Beschichtung aus einem thermoplastischen Elastomer (TPE) auf, die eine äußere Beschichtung auf der Oberfläche der Kraftübertragungszone ist und die bei Betrieb des Riemens mit einer Riemenscheibe in Kontakt tritt. Das thermoplastische Elastomer der Beschichtung ist dabei erfindungsgemäß vom Typ thermoplastisches Polyolefin(PO)/-Ethylen-α-Olefin(EAO)-Elastomer mit einem Polyolefin-Anteil von 10 bis 50 Gew.-%.

## Patentansprüche

1. Kraftübertragungsriemen mit einem Riemenkörper (10) an dem eine Kraftübertragungszone (12) ausgebildet ist, wobei der Riemenkörper (10) insgesamt oder eine Riemenschicht, die die Kraftübertragungszone (12) umfasst, aus einem Ethylen-alpha-Olefin(EAO)-Elastomer gebildet ist und wobei unmittelbar auf der Kraftübertragungszone (12) eine Beschichtung (14) aus einem thermoplastischen Elastomer (TPE) aufliegt, **dadurch gekennzeichnet,**
**dass** das thermoplastische Elastomer der Beschichtung ein TPE-O oder TPE-V vom Typ thermoplastisches Polyolefin(PO)/Ethylen-alpha-Olefin(EAO)-Elastomer ist, dessen Polyolefin-Anteil 5 bis 35 Gew.-% beträgt,
**dass** die Beschichtung aus dem thermoplastischen Elastomer besteht und dass die Beschichtung eine bei Betrieb zur Riemenscheibe gerichtete äußere Riemenoberfläche und eine Wirkfläche der Kraftübertragungszone an der Riemenscheibe bildet.

2. Kraftübertragungsriemen nach Anspruch 1, **dadurch gekennzeichnet, dass** der Polyolefin-Anteil des TPE der Beschichtung (14) 10 bis 25 Gew.-% und vorzugsweise 10 bis 20 Gew.-% beträgt.

3. Kraftübertragungsriemen nach Anspruch 1 oder 2, **dadurch gekennzeichnet, dass** das Ethylen-alpha-Olefin des TPE der Beschichtung (14) ein EPDM, ein EPM oder ein Gemisch aus beiden ist, optional verschnitten mit Naturkautschuk (NR) und/oder Butadienkautschuk (BR) und/oder Isoprenkautschuk (IR).

4. Kraftübertragungsriemen nach einem der Ansprüche 1 bis 3, **dadurch gekennzeichnet, dass** das Polyolefin des TPE der Beschichtung (14) ein Homopolymer oder eine Mischung mehrerer Polyolefin-Homopolymere oder ein Polyolefin-Copolymer ist.

5. Kraftübertragungsriemen nach einem der Ansprüche 1 bis 4, **dadurch gekennzeichnet, dass** das Polyolefin des TPE der Beschichtung (14) ein Polypropylen ist.

6. Kraftübertragungsriemen nach einem der Ansprüche 1 bis 5, **dadurch gekennzeichnet, dass** das Ethylen-alpha-Olefin der Kraftübertragungszone (12) EPDM, EPM oder ein Gemisch hieraus ist, optional zusätzlich verblendet mit einem NR, BR und/oder IR.

7. Kraftübertragungsriemen nach einem der Ansprüche 1 bis 6, **dadurch gekennzeichnet**, das das thermoplastische Elastomer der Beschichtung (14) bis zu 50 Teile je 100 Teile TPE, eines verstärkenden Füllstoffs enthält, vorzugsweise Ruß.

8. Kraftübertragungsriemen nach einem der Ansprüche 1 bis 7, **dadurch gekennzeichnet, dass** die Schichtdicke der Beschichtung (14) 0,02 bis 2 mm beträgt.

9. Kraftübertragungsriemen nach einem der Ansprüche 1 bis 8, **dadurch gekennzeichnet, dass** der Riemen ein Keilriemen oder ein Keilrippenriemen (1; 101) ist.

10. Verfahren zur Herstellung des Kraftübertragungsriemens nach einem der Ansprüche 1 bis 9, **dadurch gekennzeichnet, dass** der Riemen im Formverfahren hergestellt wird und das Material der Beschichtung (14) in Folienform auf einen vorkonfektionierten Wickel aufgebracht oder vor einer Konfektionierung auf eine für den Riemen vorgesehene Kernmischung dubliert wird.

## Claims

1. Power-transmission belt with a belt body (10), on which a power-transmission zone (12) is configured, where the entire belt body (10) or a belt layer which comprises the power-transmission zone (12) is composed of an ethylene-alpha-olefin (EAO) elastomer, and where a coating (14) made of a thermoplastic elastomer (TPE) lies directly on the power-transmission zone (12), **characterized in that** the thermoplastic elastomer of the coating is a TPEO or TPEV of the thermoplastic polyolefin (PO)/ethylene-alpha-olefin (EAO) elastomer type whose polyolefin content is 5 to 35% by weight, **in that** the coating consists of the thermoplastic elastomer, and **in that** the coating forms an exterior belt surface which during operation is directed towards the belt pulley, and forms a surface where the power-transmission zone acts on the belt pulley.

2. Power-transmission belt according to Claim 1, **characterized in that** the polyolefin content of the TPE of the coating (14) is 10 to 25% by weight and preferably 10 to 20% by weight.

3. Power-transmission belt according to Claim 1 or 2, **characterized in that** the ethylene-alpha-olefin of the TPE of the coating (14) is an EPDM, an EPM or a mixture of the two, optionally blended with natural rubber (NR) and/or butadiene rubber (BR) and/or isoprene rubber (IR) .

4. Power-transmission belt according to any of Claims 1 to 3, **characterized in that** the polyolefin of the TPE of the coating (14) is a homopolymer or a mixture of a plurality of polyolefin homopolymers, or is a polyolefin copolymer.

5. Power-transmission belt according to any of Claims 1 to 4, **characterized in that** the polyolefin of the TPE of the coating (14) is a polypropylene.

6. Power-transmission belt according to any of Claims 1 to 5, **characterized in that** the ethylene-alpha-olefin of the force-transmission zone (12) is EPDM, EPM or a mixture thereof, optionally additionally blended with an NR, BR and/or IR.

7. Power-transmission belt according to any of Claims 1 to 6, **characterized in that** the thermoplastic elastomer of the coating (14) comprises, for every 100 parts of TPE, up to 50 parts of a reinforcing filler, preferably carbon black.

8. Power-transmission belt according to any of Claims 1 to 7, **characterized in that** the layer thickness of the coating (14) is 0.02 to 2 mm.

9. Power-transmission belt according to any of Claims 1 to 8, **characterized in that** the belt is a V-belt or a V-ribbed belt (1; 101).

10. Process for the production of the power-transmission belt according to any of Claims 1 to 9, **characterized in that** the belt is produced by moulding and the material of the coating (14) is applied in film form to a prefabricated coil or, before fabrication, is doubled on a core mixture intended for the belt.

## Revendications

1. Courroie de transmission de puissance dotée d'un corps de courroie (10) au niveau duquel une zone de transmission de puissance (12) est formée, le corps de courroie (10) en entier ou une couche de courroie, qui comprend la zone de transmission de puissance (12), étant formé(e) d'un élastomère éthylène-alpha-oléfine (EAO) et un revêtement (14) composé d'un élastomère thermoplastique (TPE) reposant directement sur la zone de transmission de puissance (12), **caractérisée en ce que** l'élastomère thermoplastique du revêtement est un TPE-O ou un TPE-V du type élastomère polyoléfine (PO)/éthylène-alpha-oléfine (EAO) thermoplastiques dont la proportion de polyoléfine est de 5 à 35 % en poids, **en ce que** le revêtement est constitué d'un élastomère thermoplastique et **en ce que** le revêtement forme une surface de courroie externe orientée vers la poulie lors du fonctionnement et une surface active de la zone de transmission de puissance au niveau de la poulie.

2. Courroie de transmission de puissance selon la revendication 1, **caractérisée en ce que** la proportion de polyoléfine du TPE du revêtement (14) est de 10 à 25 % en poids et de préférence de 10 à 20 % en poids.

3. Courroie de transmission de puissance selon la revendication 1 ou 2, **caractérisée en ce que** l'éthylène-alpha-oléfine du TPE du revêtement (14) est un EPDM, un EPM ou un mélange des deux, éventuellement coupé avec un caoutchouc naturel (NR) et/ou un caoutchouc de butadiène (BR) et/ou un caoutchouc d'isoprène (IR).

4. Courroie de transmission de puissance selon l'une quelconque des revendications 1 à 3, **caractérisée en ce que** la polyoléfine du TPE du revêtement (14) est un homopolymère ou un mélange de plusieurs homopolymères de polyoléfine ou un copolymère de polyoléfine.

5. Courroie de transmission de puissance selon l'une quelconque des revendications 1 à 4, **caractérisée en ce que** la polyoléfine du TPE du revêtement (14) est un polypropylène.

6. Courroie de transmission de puissance selon l'une quelconque des revendications 1 à 5, **caractérisée en ce que** l'éthylène-alpha-oléfine de la zone de transmission de puissance (12) est un EPDM, un EPM ou un mélange correspondant, éventuellement de plus mélangé avec un NR, un BR et/ou un IR.

7. Courroie de transmission de puissance selon l'une quelconque des revendications 1 à 6, **caractérisée en ce que** l'élastomère thermoplastique du revêtement (14) contient jusqu'à 50 parties pour 100 parties de TPE, d'une charge renforçante, de préférence de la suie.

8. Courroie de transmission de puissance selon l'une quelconque des revendications 1 à 7, **caractérisée en ce que** l'épaisseur de couche du revêtement (14) est de 0,02 à 2 mm.

9. Courroie de transmission de puissance selon l'une quelconque des revendications 1 à 8, **caractérisée en ce que** la courroie est une courroie trapézoïdale ou une courroie à nervure trapézoïdale (1 ; 101).

10. Procédé pour la fabrication de la courroie de transmission de puissance selon l'une quelconque des revendications 1 à 9, **caractérisé en ce que** la courroie est fabriquée dans un procédé de moulage et le matériau du revêtement (14) est appliqué sous forme de feuille sur un rouleau préconfectionné ou, avant une confection, est doublé sur un mélange de noyau prévu pour la courroie.
